# EUROPÄISCHE PATENTSCHRIFT

(11) **EP 3 391 079 B1**
(45) Veröffentlichungstag und Bekanntmachung des Hinweises auf die Patenterteilung: **02.07.2025**
(21) Anmeldenummer: 17725973.6
(22) Anmeldetag: 29.05.2017
(51) Int. Cl.: G01S 13/00, G01S 13/56, G01S 13/88, H05B 47/19, H05B 47/115, H05B 47/175

(54) **ANWESENHEITSDETEKTION MITTELS FUNKSIGNALEN IN EINEM BELEUCHTUNGSSYSTEM**
PRESENCE DETECTION BY MEANS OF RADIO SIGNALS IN A LIGHTING SYSTEM
DÉTECTION DE PRÉSENCE AU MOYEN DE SIGNAUX RADIO DANS UN SYSTÈME D'ÉCLAIRAGE

(30) Priorität: 09.06.2016 DE 102016210172
(43) Veröffentlichungstag der Anmeldung: 24.10.2018
(73) Patentinhaber: Zumtobel Lighting GmbH, 6850 Dornbirn (AT)
(72) Erfinder: DAVULURU, Uday Teja, 40239 Düsseldorf (DE); SIEGEL, Martin, 88097 Eriskirch (DE)
(74) Vertreter: Beder, Jens
(86) Internationale Anmeldenummer: PCT/EP2017/062864
(87) Internationale Veröffentlichungsnummer: WO 2017/211606

(56) Entgegenhaltungen:
- EP-A1- 3 048 455
- EP-A2- 2 849 540
- EP-A2- 2 849 540
- WO-A1-2015/035830
- US-A1- 2013 229 116
- US-A1- 2013 229 116
- US-A1- 2015 378 004
- US-A1- 2016 047 892
- BROETJE MARTINA: "Person tracking for WiFi based multistatic passive radar", PROCEEDINGS OF THE 16TH INTERNATIONAL CONFERENCE ON INFORMATION FUSION, ISIF ( INTL SOCIETY OF INFORMATION FUSI, 9 July 2013 (2013-07-09), pages 280 - 287, XP032512557, ISBN: 978-605-86311-1-3, [retrieved on 20131018]
- BROETJE MARTINA: "Person tracking for WiFi based multistatic passive radar", PROCEEDINGS OF THE 16TH INTERNATIONAL CONFERENCE ON INFORMATION FUSION, ISIF ( INTL SOCIETY OF INFORMATION FUSI, 9 July 2013 (2013-07-09), pages 280 - 287, XP032512557, ISBN: 978-605-86311-1-3, [retrieved on 20131018]

## Beschreibung

Die vorliegende Erfindung betrifft eine Vorrichtung und ein Verfahren zur Anwesenheitsdetektion vorzugsweise in geschlossenen Räumen. Die Erfindung betrifft insbesondere die Anwesenheitsdetektion von Personen.

Sensoren zur Anwesenheitsdetektion werden oft in der Beleuchtungstechnik eingesetzt, um die Beleuchtung in Abhängigkeit von An- oder Abwesenheit von Personen automatisch zu schalten. Solche Sensoren nutzen zur Personendetektion hauptsächlich die Passiv-Infrarot (PIR) Radar-Technologie.

Die PIR-Technologie benötigt zur Realisierung eines praktikablen Erfassungsbereichs eine Linse. Diese Linse stellt insbesondere optisch eine Unschönheit im Design von Leuchten dar, da diese eine bestimmte Größe für die korrekte Funktionalität benötigt. Zudem sind PIR-Elemente relativ teuer und die PIR-Technologie ist auf eine bestimmte Temperatur des zu erfassenden Objekts angewiesen, weswegen vor allem auch ein ungewolltes Einschalten durch eine Erfassung von warmen Gegenständen, die keine Personen sind, ausgelöst werden kann. Die Bestimmung der Bewegungsrichtung des zu erfassenden Objekts ist außerdem nur mit einer Vielzahl von räumlich verteilten PIR-Elementen möglich.

Die US 2013/229116 A1 offenbart eine Leuchte mit einem Radarsystem zur Anwesenheitsdetektion von Personen und Fahrzeugen.

"Passive radar based control of wind turbine collision warning for air traffic PARASOL" by Jörg Heckenbach, et al, (16th International Radar Symposium, (IRS), 24-26 June 2015, S. 1-6. - ISBN 978-1-4799-7841-0) beschreibt ein passives radarbasiertes System zur bedarfsgesteuerten Aktivierung der Kollisionswarnleuchten von Windkraftanlagen, um die Akzeptanz erneuerbarer Energien in der Bevölkerung zu erhöhen und die Anziehung von Vögeln durch Lichtemissionen zu vermeiden. Das Systemdesign besteht aus drei passiven Radarsensoren, die die Position potenzieller Ziele durch die Messung der Zeitdifferenz (TDOA) von direkten und reflektierten Echosignalen und die Berechnung der TDOA-Ellipsoid-Schnittpunkte bestimmen.

"Person tracking for WiFi based multistatic passive radar" by Martina Broetje (16th International Conference on Information Fusion (FUSION), 9-12 July 2013, Istanbul Turkey, S280-187, - SIBN 978-605-86311-1-3 diskutiert die Aufgabe der Personenverfolgung für WiFi-basierte multistatische passive Radarsysteme. Um von dem Lokalisierungsgewinn durch die Zusammenführung von Messungen verschiedener Sender-Empfänger-Paare zu profitieren, ist eine robuste Zuordnungsstrategie erforderlich. Das Dokument enthält eine Version des Multihypothesen-Trackers, der ein detailliertes Modell der Entdeckungswahrscheinlichkeit (z. B. wird die Verdeckung durch Wände modelliert) und eine Strategie für den Umgang mit ungelösten Messungen enthält.

DE 20 2004 005 087 U1 beschreibt einen lokalen Oszillator, der eine stabile Zwischenfrequenz erzeugt. Weitere Übertragungseinrichtungen modulieren die gemeinsame Zwischenfrequenz mit Radar- und Digitalsignalen. Mischer erzeugen Signale auf der HF-Trägerfrequenz, die übertragen werden. Empfängermischer trennen die gemeinsame Zwischenfrequenz von der HF-Trägerfrequenz. Weitere Einheiten trennen Radar- und Digitalsignale auf der gemeinsamen Zwischenfrequenz.

Aus der EP 2 849 540 A2 ist ein Beleuchtungssystem bekannt, bei dem mittels an Leuchten angebrachten Radarsensoren die Bewegungsrichtung und Geschwindigkeit von Personen und Fahrzeugen erfasst werden, um in der Bewegungsrichtung befindlichen Leuchten einzuschalten. Die WO 2015/035830 A1 offenbart die Anwesenheitsdetektion von Personen mittels einem Mobiltelefon, das eine Wi-Fi Antenne zum Senden eines Funksignals und eine Wi-Fi Antenne zum Empfangen des von einer Person reflektieren Funksignals sowie Mittel zum Detektieren von Merkmalen des reflektieren Funksignal, welche die Anwesenheit der Person anzeigen, aufweist.

In der US 2015/378004 A1 wird ein symbiotisches Radar- und Kommunikationssystem offenbart. Das System umfasst eine Vielzahl von Basisstationen, die mit einem größeren Kommunikationsnetzwerk kommunizieren, wobei jede Basisstation so konfiguriert ist, dass sie Kommunikationssignale an eine Vielzahl von Benutzerterminals sendet und von diesen empfängt. Das System führt eine Kommunikationsdatenverarbeitung und eine Radardatenverarbeitung der empfangenen Signale durch, so dass darin enthaltene Zielobjektreflexionen aufgelöst werden können.

In der US 2016/047892 A1 wird ein Verfahren und eine Vorrichtung beschrieben, bei der eine FMCW-Radareinheit (Frequency-Modulated-Continuous-Wave) zur Datenkommunikation verwendet wird, indem ein Signal mit einem phasenkodierten Datenkanal empfangen und das Signal mit dem phasenkodierten Datenkanal verarbeitet wird, um gleichzeitig Daten und Zeitinformationen zu ermitteln.

Der Erfindung liegt die Aufgabe zugrunde, Vorrichtungen und Verfahren anzugeben, die die beschriebenen Probleme verringern. Aufgabe ist es insbesondere, eine Vorrichtung und ein Verfahren zur Anwesenheitsdetektion bereitzustellen, die eine genaue Detektion und eine kostengünstige und leicht integrierbare Ausgestaltung erlauben.

Diese Aufgabe wird gemäß den Merkmalen der unabhängigen Ansprüche gelöst. Die Erfindung wird durch die Merkmale der abhängigen Ansprüche weitergebildet.

Gemäß der vorliegenden Erfindung weist die Vorrichtung zur Anwesenheitsdetektion Mittel zum Senden und Empfangen von Hochfrequenz-Funksignalen zur Datenübertragung, Mittel zum Erfassen einer durch die Anwesenheit eines im Empfangsbereich des Sende- und Empfangsmittels befindlichen Objekts verursachten Änderung in einem von dem Sende- und Empfangsmittel für die Datenübertragung empfangenen Hochfrequenz-Funksignal und Mittel zum Ausgeben eines eine Anwesenheit eines Objekts anzeigenden Signals auf Grundlage der von dem Erfassungsmittel erfassten Änderung auf. Das Sende- und Empfangsmittel ist dazu ausgelegt ist, nach einer ersten Erfassung einer Anwesenheit des Objekts, welche sich während der Datenübertragung ereignet, Hochfrequenz-Funksignale, die nicht einer Datenübertragung, sondern der Objekterfassung dienen, zu senden

Das Sende- und Empfangsmittel kann eine bereits vorhandene Funkübertragungseinrichtung sein, welche beispielsweise gemäß dem Standard IEEE 802.15.4, einem Übertragungsprotokoll für Wireless Personal Area Networks (WPAN), arbeitet und in vielen Geräten oder Leuchten schon verbaut ist. Somit wird für die Anwesenheitsdetektion kein zusätzliches Erfassungselement (Sensor) benötigt, was eine kostengünstige und leicht integrierbare Ausgestaltung erlaubt.

Die bei der Datenübertragung von der anderen Vorrichtung gesendeten Hochfrequenz-Funksignale werden von dem im Empfangsbereich des Sende- und Empfangsmittels befindlichen Objekt, wie einer Person, reflektiert bzw. absorbiert und re-emittiert. Das reflektierte oder reemittierte Hochfrequenz-Funksignal wird von dem Sende- und Empfangsmittel empfangen und von dem Erfassungsmittel ausgewertet, wobei spezielle, durch die Reflexion an dem Objekt verursachte Muster in dem empfangenen Signal detektiert werden können. Unterschiedliche Objekte können unterschiedliche Muster erzeugen, was eine Identifizierung von Objekten erlaubt.

Da der menschliche Körper zum überwiegenden Teil aus Wasser besteht, kann die Anwesenheit des im Empfangsbereich des Sende- und Empfangsmittels befindlichen Objekts eine Phasenverschiebung in dem gesendeten Hochfrequenz-Funksignal verursachen, wobei das Erfassungsmittel für die Erfassung der Änderung dazu ausgelegt sein kann, die Phasenverschiebung in dem empfangenen bzw. reflektierten Hochfrequenz-Funksignal zu detektieren. Dies kann durch Vergleichen des empfangenen Hochfrequenz-Funksignals mit dem gesendeten Hochfrequenz-Funksignals erfolgen, wobei ein bekanntes von einer anderen Quelle bzw. der anderen Vorrichtung ausgesendetes, von dem Objekt reflektiertes und von dem Sende- und Empfangsmittel empfangenes Hochfrequenz-Funksignal für die Anwesenheitsdetektion von dem Erfassungsmittel ausgewertete wird.

Die Anwesenheit des im Empfangsbereich des Sende- und Empfangsmittels befindlichen Objekts kann auch eine Frequenzänderung in dem gesendeten Hochfrequenz-Funksignal verursachen (Doppler-Effekt), wobei das Erfassungsmittel für die Erfassung der Änderung dazu ausgelegt sein kann, zumindest die Frequenzänderung in dem empfangenen Hochfrequenz-Funksignal zu detektieren. Hiermit ist es auch möglich die Bewegungsrichtung des Objekts zu ermitteln. Insbesondere kann mit der erfassten Frequenzänderung bestimmt werden, ob sich das Objekt auf das Sende- und Empfangsmittel zu bewegt oder von ihm weg, so dass beispielsweise eine oder mehrere in der Bewegungsrichtung angeordnete Leuchten eingeschaltet und/oder entgegen der Bewegungsrichtung angeordnete Leuchten ausgeschaltet werden können.

Das Sende- und Empfangsmittel kann dazu ausgelegt sein, bei der Datenübertragung Informationen über aktuell erfasste Anwesenheiten von Objekten an zumindest eine andere Vorrichtung zur Anwesenheitsdetektion oder eine zentrale Steuereinrichtung zu übertragen. Mit diesen Informationen kann die Bewegungsrichtung und/oder ein Bewegungsmuster eines oder mehrerer Objekte ermittelt werden, um beispielsweise Bewegungsrichtungen bzw. An- oder Abwesenheiten in bestimmten Bereichen auf Grundlage der bisher erfassten Richtungen/Muster vorherzusagen und Leuchten entsprechend der vorhergesagten Bewegungsrichtungen bzw. der vorhergesagten An- oder Abwesenheiten zu steuern. Auf Grundlage von vorhergesagten An- oder Abwesenheiten können Leuchten und/oder andere Aktoren bereits aktiviert werden, bevor eine Person von einer Vorrichtung zur Anwesenheitsdetektion erfasst wird.

Die Vorrichtung kann Mittel zum Bestimmen der Bewegungsrichtung des in dem Empfangsbereich des Sende- und Empfangsmittels befindlichen Objekts aufweisen, wobei das Sende-und Empfangsmittel dazu ausgelegt sein kann, bei der Datenübertragung zumindest Informationen über aktuell erfasste Anwesenheiten von Objekten von zumindest einer anderen Vorrichtung zur Anwesenheitsdetektion zu empfangen. Das Bestimmungsmittel kann dazu ausgelegt sein, die Bewegungsrichtung zumindest auf Grundlage der von dem Erfassungsmittel erfassten Änderung und der empfangenen Informationen zu bestimmen und das Ausgabemittel kann dazu ausgelegt sein, das Signal auf Grundlage der bestimmten Bewegungsrichtung auszugeben. Hiermit können wie oben beschrieben in oder entgegen der Bewegungsrichtung angeordnete Leuchten und/oder andere Geräte zu bzw. abgeschaltet, gedimmt oder anderweitig angesteuert werden.

Das Sende-und Empfangsmittel kann dazu ausgelegt sein, Hochfrequenz-Funksignale mit Frequenzen von vorzugsweise 2,4 GHz oder höher zumindest zu empfangen oder auch zu senden.

Eine Leuchte gemäß der vorliegenden Erfindung weist zumindest eine der oben beschriebenen Vorrichtungen und eine Steuereinrichtung zum Steuern des von der Leuchte abgegebenen Lichts auf Grundlage des von dem Ausgabemittel ausgegebenen Signals auf.

Gemäß der vorliegenden Erfindung weist ein Verfahren zur Anwesenheitsdetektion die Schritte:
- Empfangen eines Hochfrequenz-Funksignals während einer Datenübertragung mittels einer Datenübertragungseinrichtung;
- Erfassen einer durch die Anwesenheit eines im Empfangsbereich der Datenübertragungseinrichtung befindlichen Objekts verursachten Änderung in dem für die Datenübertragung empfangenen Hochfrequenz-Funksignal; und
- Ausgeben eines eine Anwesenheit eines Objekts anzeigenden Signals auf Grundlage der erfassten Änderung und
- Senden, nach einer ersten Erfassung einer Anwesenheit des Objekts, welche sich während der Datenübertragung ereignet, von Hochfrequenz-Funksignalen, die nicht einer Datenübertragung, sondern der Objekterfassung dienen, mittels der Datenübertragungseinrichtung auf.

Die Anwesenheit des im Empfangsbereich des Sende- und Empfangsmittels befindlichen Objekts kann zumindest eine Verschiebung der Phase des gesendeten Hochfrequenz-Funksignals verursachen, wobei in dem Erfassungsschritt die Phasenverschiebung in dem empfangenen Hochfrequenz-Funksignal detektiert werden kann.

Zusätzlich oder alternativ kann die Anwesenheit des im Empfangsbereich des Sende-und Empfangsmittels befindlichen Objekts eine Frequenzänderung in dem gesendeten Hochfrequenz-Funksignal verursachen, wobei in dem Erfassungsschritt die Frequenzänderung in dem empfangenen Hochfrequenz-Funksignal detektiert werden kann.

Mit dem Verfahren können zusätzlich die Bewegungsrichtung und/oder der Abstand des in dem Empfangsbereich der Datenübertragungseinrichtung befindlichen Objekts bezüglich des Sende-und Empfangsmittels auf der Grundlage der erfassten Frequenzänderung bestimmt werden.

Das Signal kann von zumindest einer Leuchte von einer Vielzahl von an verschiedenen Orten befindlichen Leuchten ausgegeben werden, welche der bestimmten Bewegungsrichtung und/oder dem bestimmten Abstand zugeordnet ist.

In dem Verfahren können Informationen mittels der Datenübertragungseinrichtung über die in dem Erfassungsschritt erfasste Anwesenheit an zumindest eine Vorrichtung zur Anwesenheitsdetektion gesendet werden.

Zusätzlich oder alternativ kann das Verfahren die Schritte:
- Empfangen von Informationen mittels der Datenübertragungseinrichtung von zumindest einer Vorrichtung zur Anwesenheitsdetektion über aktuell detektierte Anwesenheiten von Objekten; und
- Bestimmen der Bewegungsrichtung des in dem Empfangsbereich der Datenübertragungseinrichtung befindlichen Objekts auf Grundlage der erfassten Änderung und der empfangenen Informationen aufweisen, wobei das Signal in dem Ausgabeschritt auf Grundlage der bestimmten Bewegungsrichtung ausgeben wird.

In dem Verfahren kann das empfangene Hochfrequenz-Funksignal eine Frequenz von 2,4 GHz oder höher aufweisen.

Nachfolgend wird die Erfindung anhand der beiliegenden Zeichnungen näher erläutert. Es zeigen:
Fig. 1 eine Vorrichtung zur Anwesenheitsdetektion nach einem ersten Ausführungsbeispiel gemäß der vorliegenden Erfindung,
Fig. 2 schematisch eine Vorrichtung zur Anwesenheitsdetektion nach einem zweiten Ausführungsbeispiel gemäß der vorliegenden Erfindung, und
Fig. 3 eine Anordnung von Leuchten nach einem Ausführungsbeispiel gemäß der vorliegenden Erfindung.

Komponenten mit gleichen Funktionen sind in den Figuren mit gleichen Bezugszeichen gekennzeichnet.

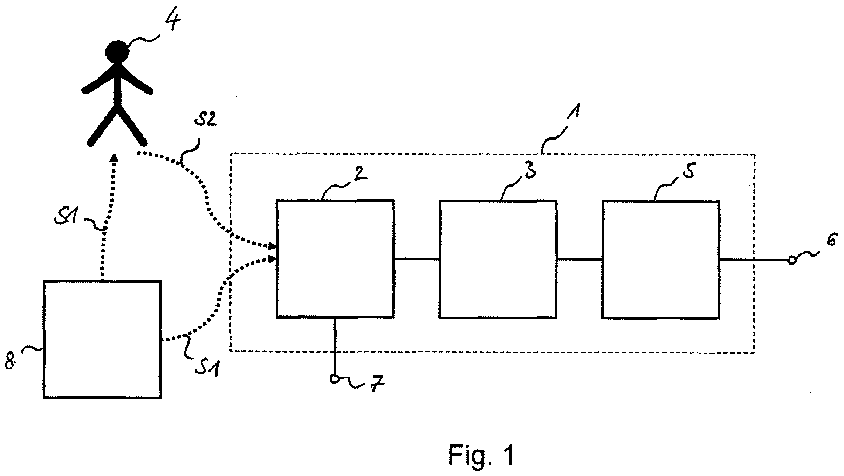

Die in Fig. 1 gezeigte Vorrichtung 1 zur Anwesenheitsdetektion weist ein Sende- und Empfangsmittel 2 zum Senden und Empfangen von Hochfrequenz-Funksignalen S1, S2, ein Erfassungsmittel 3 zum Erfassen einer durch die Anwesenheit eines im Empfangsbereich des Sende- und Empfangsmittels 2 befindlichen Objekts 4 verursachten Änderung in einem von dem Sende-und Empfangsmittel empfangenen Hochfrequenz-Funksignal S2 und ein Ausgabemittel 5 zum Ausgeben eines eine Anwesenheit des Objekts 4 anzeigenden Signals an dem Ausgangsanschluss 6 auf Grundlage der von dem Erfassungsmittel 3 erfassten Änderung auf.

Das Sende- und Empfangsmittel 2 ist ein Sende-Empfangsgerät (Transceiver), das über eine Funkverbindung Daten, welche an dem Anschluss 7 eingegeben werden, an ein externes Gerät 8 sendet und Daten von dem externen Gerät 8 empfängt, um sie an dem Anschluss 7 auszugeben.

Wie in Fig. 1 gezeigt, erreicht das von dem externen Gerät 8 gesendete Hochfrequenz-Funksignal S1 auch das im Empfangsbereich des Sende- und Empfangsmittels 2 befindliche Objekt 4, eine Person, an der das Hochfrequenz-Funksignal S1 reflektiert/abgelenkt bzw. re-emittiert und als Hochfrequenz-Funksignal S2 von dem Sende- und Empfangsmittel 2 empfangen wird.

Das Sende- und Empfangsmittel 2 gibt das empfangene, von dem Objekt 8 reflektierte Hochfrequenz-Funksignal S2 an das Erfassungsmittel 3 weiter, welches eine durch die Anwesenheit des Objekts verursachte Änderung in dem Hochfrequenz-Funksignal in Bezug auf das originale bzw. unveränderte Hochfrequenz-Funksignal S1 bestimmt.

Eine Änderung kann eine Phasenverschiebung und/oder eine Änderung der Frequenz (Doppler-Effekt) in dem empfangenen Hochfrequenz-Funksignal sein, wobei es beispielsweise bei einem drahtlosen lokalen Netzwerk (Wireless LAN, WLAN) mit einem Frequenzband von 2,4 GHz zu Frequenzabweichungen von 8 Hz bei einer sich im Empfangsbereich bewegenden Person kommen kann. Das Sende- und Empfangsmittel 2 kann gemäß dem "Bluetooth"-Funkverfahren/Standard arbeiten. Mit zunehmender Frequenz erhöht sich auch die Frequenzabweichung. Eine Verwendung der Erfindung in einem 5GHz WLAN-Netz ist daher besonders vorteilhaft, da sich die Erkennung vereinfacht.

In der Vorrichtung 1 können verschiedene Muster und/oder Werte von Signalabweichungen gespeichert sein, welche mit hoher Wahrscheinlichkeit bei der Anwesenheit von durch die Vorrichtung 1 zu detektierenden Objekten 4 auftreten und welche von dem Erfassungsmittel 3 mit dem aktuell ermittelten Muster und/oder Wert der Phasen/Frequenzänderung verglichen werden. Die in der Vorrichtung 1 gespeicherten Muster und/oder Werte sind vom Hersteller bestimmt. Alternativ oder zusätzlich können sie vor Ort ermittelt bzw. angepasst oder ergänzt werden, wobei der Vorrichtung 1 in einer Lernphase die Anwesenheit eines zu erfassenden Objekts durch ein spezielles Signal angezeigt wird, so dass die von dem Erfassungsmittel 3 ermittelte zugehörige Signalabweichung bzw. das Muster für die spätere Anwesenheitsdetektion gespeichert wird.

Wird eine durch die Anwesenheit des Objekts 4 verursachte Änderung bzw. eine Übereinstimmung mit einem gespeicherten Muster oder einem gespeicherten Wert erkannt, veranlasst das Erfassungsmittel 3 das Ausgabemittel 5 ein die Anwesenheit eines Objekts 4 anzeigendes Signal an dem Ausgangsanschluss 6 auszugeben. Das Signal wird über den gesamten Zeitraum der Anwesenheit oder über einen bestimmten Zeitraum ausgegeben. An dem Ausgangsanschluss 6 kann eine Leuchte oder ein Aktor, wie ein Türöffner, anschlossen werden, um diese durch das Signal ein oder aus zuschalten.

In dem in Fig. 1 gezeigten Ausführungsbeispiel wird das für die Anwesenheitsdetektion genutzte Hochfrequenz-Funksignal Sl von dem externen Gerät 8 gesendet. Es ist jedoch auch möglich, dass das Sende-und Empfangsmittel 2 sowohl das Hochfrequenz-Funksignal Sl sendet als auch das reflektierte Hochfrequenz-Funksignal S2 empfängt.

Auf diese Weise kann eine Anwesenheitsdetektion beim Senden und Empfangen von Daten zu/von dem externen Gerät 8 erfolgen. Nach einer ersten Erfassung einer Anwesenheit des Objekts 4, welche sich während einer Datenübertragung ereignet, senden die Sende- und Empfangsmittel 2 und/oder das externe Gerät 8 nach einer Aufforderung durch die Vorrichtung 1 spezielle Hochfrequenz-Funksignale, die nicht der Datenübertragung sondern der Objekterfassung dienen.

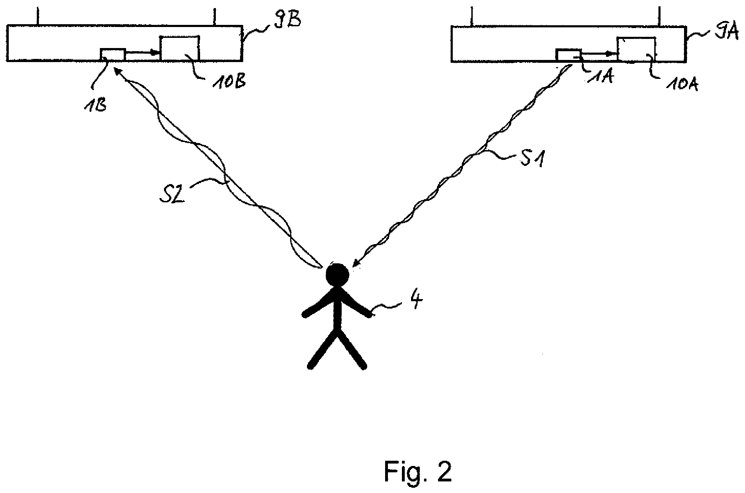

Fig. 2 zeigt ein Beleuchtungssystem, bei dem zwei an verschiedenen Positionen angeordnete Deckenleuchten 9A und 9B jeweils eine Vorrichtung 1A, 1B zur Anwesenheitsdetektion gemäß der vorliegenden Erfindung und eine Steuereinrichtung 10A, 10B zum Steuern des von den Leuchten 9A, 9B abgegebenen Lichts aufweisen. Beide Vorrichtungen 1A, 1B können sowohl die Anwesenheit als auch die Bewegungsrichtung des in dem Empfangsbereich befindlichen Objekts bestimmen, wobei eine Frequenzänderung in dem empfangenen Hochfrequenz- Funksignal S2 detektiert wird. Die Ergebnisse werden von der Vorrichtung 1A, 1B an die Steuereinrichtung 10A, 10B übermittelt, welche das Licht auf dieser Grundlage ein- / ausschalt oder dimmt. Das System kann selbstverständlich auch andere Infrastrukturelemente wie beispielsweise Router zusätzlich oder anstelle eines oder beider Leuchten 9A, 9B aufweisen, die mit der Vorrichtung 1A, 1B angerichtet sind.

In dem in Fig. 2 gezeigten Beispiel bewegt sich das Objekt 4 von dem von der Deckenleuchte 9A beleuchteten Bereich weg und auf den von der Deckenleuchte 9B zu beleuchtenden Bereich zu. Das von der Vorrichtung 1A der Deckenleuchte 9A gesendete Hochfrequenz-Funksignal S1 ist in einem sinusförmigen Verlauf dargestellt und wird von dem sich bewegenden Objekt 4 reflektiert und in seiner Frequenz verändert. Die Vorrichtung 1A der Deckenleuchte 9A empfängt das reflektierte Hochfrequenz-Funksignal S2 und ermittelt daraus die Anwesenheit und die Bewegungsrichtung des Objekts 4. Da sich das Objekt 4 auf die Deckenleuchte 9B zubewegt, schaltet die Steuereinrichtung 10B die Deckenleuchte 9B ein, nicht aus oder dimmt das Licht hoch.

In ähnlicher Weise kann die Vorrichtung 1A die Anwesenheit und die Bewegungsrichtung des Objekts 4 ermitteln. Hierzu wird das reflektierte Hochfrequenz-Funksignal S2 von dem selbst ausgesendeten Hochfrequenz-Funksignal S1 bewertet oder ein reflektiertes Hochfrequenz-Funksignal S2, das von einem von der Vorrichtung 1B der Deckenleuchte 9B gesendeten Hochfrequenz-Funksignal S1 verursacht wird. Da sich das Objekt 4 von der Deckenleuchte 9A wegbewegt, schaltet die Steuereinrichtung 10A die Deckenleuchte 9A ab, nicht ein oder dimmt das Licht herunter.

Die Bewegungsrichtung des Objekts 4 oder dessen aktuelle Position kann auch mittels der Auswertung von Erfassungszeiten ermittelt werden. Hierfür kann die Steuereinrichtung 10A oder die Vorrichtung 1A der Deckenleuchte 9A das Ereignis der Erfassung des Objekts 4, welche zum Beispiel durch eigenes Aussenden des Hochfrequenz-Funksignals S1 erfolgte, der Steuereinrichtung 10B oder der Vorrichtung 1B anzeigen.

Diese kann aus der zeitlichen Differenz zwischen dem Zeitpunkt der Anzeige und dem Zeitpunkt, an dem das Objekt 4 von der Vorrichtung 1B erfasst wird, bestimmen, ob sich das Objekt 4 auf die Deckenleuchte 9B bzw. auf die Vorrichtung 1B zubewegt oder von ihr weg. Allerdings ist hierzu eine Synchronisierung der Zeitbasis in beiden Vorrichtungen 1A, 1B erforderlich.

Wird das Objekt 4 von einer der Vorrichtungen 1A, 1B erfasst, kann diese, wie oben beschrieben, spezielle Hochfrequenz-Funksignale, die nicht der Datenübertragung sondern der Objekterfassung dienen, senden, um der andren Vorrichtungen 1A, 1B eine schnelle und genaue Erfassung Objekt 4 zu ermöglichen.

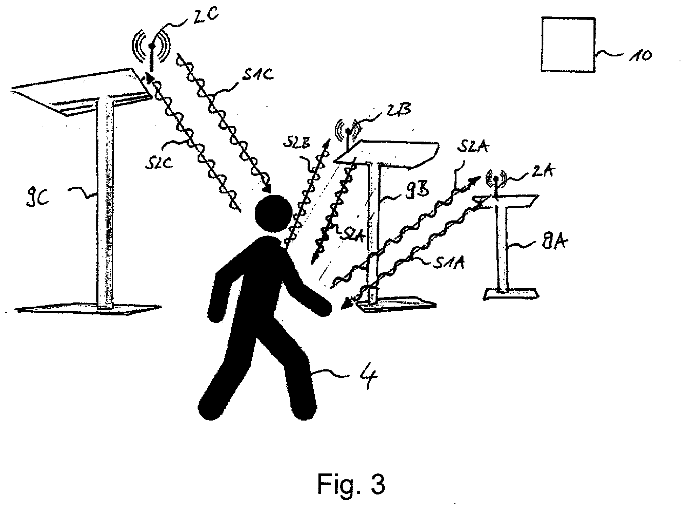

Fig. 3 zeigt ein Beleuchtungssystem mit einer Vielzahl von Standleuchten 9A, 9B, 9C, die von einer zentralen Steuereinrichtung 10 steuerbar sind. Die Standleuchten 9A, 9B, 9C weisen jeweils zumindest das Sende- und Empfangsmittel 2A, 2B, 2C auf.

Die Steuereinrichtung 10 kann über eine Funkverbindung und/oder mittels Kabel (nicht gezeigt) mit den Standleuchten 9A, 9B, 9C verbunden sein. Ist die Steuereinrichtung 10 mittels Kabel mit den Standleuchten 9A, 9B, 9C, insbesondere mit dem Anschuss 7 des jeweiligen Sende- und Empfangsmittels 2A, 2B, 2C verbunden, kann sich das Erfassungsmittel 3 und das Ausgabemittel 5 auf der Seite der Steuereinrichtung 10 befinden bzw. in der Steuereinrichtung 10 integriert sein.

Die Standleuchten 9A, 9B, 9C kommunizieren über die Sende-und Empfangsmittel 2A, 2B, 2C untereinander, mit der Steuereinrichtung 10 und/oder Geräten zur Fernbedienung der Standleuchten 9A, 9B, 9C (nicht gezeigt).

Die Anwesenheit und die Bewegungsrichtung des Objekts 4 werden gemäß dem oben beschrieben Verfahren von jeder der Standleuchten 9A, 9B, 9C erfasst und der Steuereinrichtung 10 übermittelt oder von der Steuereinrichtung 10 mittels der an dem jeweiligen Anschluss 7 ausgegeben Hochfrequenz-Funksignale S1, S2 selbst bestimmt. Die Steuereinrichtung 10 ermittelt aus der erfassten Anwesenheit und Bewegungsrichtung sowie den Zeiten der Erfassungen der an verschiedenen Positionen befindlichen Standleuchten 9A, 9B, 9C die aktuelle und zukünftige Position (Pfad) des Objekts 4 und steuert die Standleuchten 9A, 9B, 9C, so dass Standleuchten 9A, 9B, 9C, die der zukünftigen Position oder dem Pfad zugeordnet sind, eingeschaltet oder hochgedimmt werden, bevor das Objekt 4 die Position erreicht und die Standleuchten 9A, 9B, 9C, die weder der aktuellen noch zukünftigen Position (oder Pfad) zugeordnet sind ab- /nicht eingeschaltet oder heruntergedimmt werden.

Es ist auch möglich, dass, nachdem die Position des Objekts 4 bestimmt oder vorhergesagt ist, die Steuereinrichtung 10 die Sende- und Empfangsmittel 2A, 2B, 2C bzw. die Standleuchten 9A, 9B, 9C ermittelt, mit denen die genaueste Erfassung des Objekts 4 möglich ist und diese veranlasst spezielle Hochfrequenz-Funksignale S1, die in diesem Fall nicht der Datenübertragung sondern der Objekterfassung dienen, auszusenden.

Die Standleuchten 9A, 9B, 9C bzw. die Steuereinrichtung 10 kann dazu ausgelegt sein, wie oben beschrieben, Muster und/oder Werte von Signalabweichungen, welche durch die Anwesenheit eines im Empfangsbereich des Sende- und Empfangsmittels befindlichen Objekts 4 verursacht werden, zu speichern und/oder zu erlernen. Insbesondre können Muster und/oder Werte von bestimmten Objekten 4 gespeichert/erlernt werden, um diese zu identifiziert (Mensch oder Tier) und ein Schalten bei der Anwesenheit dieser Objekte 4 zu erlauben bzw. zu unterdrücken.

## Patentansprüche

1. Vorrichtung zur Anwesenheitsdetektion mit
Mittel (2) zum Senden und Empfangen von Hochfrequenz-Funksignalen (S1, S2) zur Datenübertragung;
Mittel (3) zum Erfassen einer durch die Anwesenheit eines im Empfangsbereich des Sende- und Empfangsmittels (2) befindlichen Objekts (4) verursachten Änderung in einem von dem Sende- und Empfangsmittel (2) für die Datenübertragung empfangenen Hochfrequenz-Funksignal (S2); und
Mittel (5) zum Ausgeben eines eine Anwesenheit eines Objekts (4) anzeigenden Signals auf Grundlage der von dem Erfassungsmittel (3) erfassten Änderung;
**dadurch gekennzeichnet,**
**dass** das Sende- und Empfangsmittel (2) dazu ausgelegt ist, nach einer ersten Erfassung einer Anwesenheit des Objekts (4), welche sich während der Datenübertragung ereignet, Hochfrequenz-Funksignale, die nicht einer Datenübertragung, sondern der Objekterfassung dienen, zu senden.

2. Vorrichtung nach Anspruch 1, wobei
die Anwesenheit des im Empfangsbereich des Sende- und Empfangsmittels (2) befindlichen Objekts (4) zumindest eine Verschiebung der Phase des gesendeten Hochfrequenz-Funksignals (S1) verursacht und das Erfassungsmittel (4) für die Erfassung der Änderung dazu ausgelegt ist, zumindest die Phasenverschiebung in dem empfangenen Hochfrequenz-Funksignal (S2) zu detektieren.

3. Vorrichtung nach Anspruch 1 oder 2, wobei
die Anwesenheit des im Empfangsbereich des Sende- und Empfangsmittels (2) befindlichen Objekts (4) zumindest eine Änderung der Frequenz des gesendeten Hochfrequenz-Funksignals (S1) verursacht und das Erfassungsmittel (3) für die Erfassung der Änderung dazu ausgelegt ist, zumindest die Frequenzänderung in dem empfangenen Hochfrequenz-Funksignal (S2) zu detektieren.

4. Vorrichtung nach einem der Ansprüche 1 bis 3, wobei
das Sende- und Empfangsmittel (2) dazu ausgelegt ist, bei der Datenübertragung zumindest Informationen über aktuell erfasste Anwesenheiten von Objekten (4) an zumindest eine andere Vorrichtung (8, 9B) zur Anwesenheitsdetektion zu übertragen.

5. Vorrichtung nach einem der Ansprüche 1 bis 4, aufweisend
Mittel (3) zum Bestimmen der Bewegungsrichtung des in dem Empfangsbereich des Sende- und Empfangsmittels (2) befindlichen Objekts (4); wobei
das Sende-und Empfangsmittel (2) dazu ausgelegt ist, bei der Datenübertragung zumindest Informationen über aktuell erfasste Anwesenheiten von Objekten (4) von zumindest der anderen Vorrichtung (8, 9B) zur Anwesenheitsdetektion zu empfangen;
das Bestimmungsmittel (3) dazu ausgelegt ist, die Bewegungsrichtung zumindest auf Grundlage der von dem Erfassungsmittel (3) erfassten Änderung und der empfangenen Informationen zu bestimmen; und
das Ausgabemittel (5) dazu ausgelegt ist, das Signal auf Grundlage der bestimmten Bewegungsrichtung auszugeben.

6. Vorrichtung nach einem der Ansprüche 1 bis 5, wobei
das Sende-und Empfangsmittel (2) dazu ausgelegt ist, Hochfrequenz-Funksignale mit Frequenzen von 2,4 GHz oder höher zumindest zu empfangen.

7. Leuchte mit zumindest einer Vorrichtung nach einem der Ansprüche 1 bis 6, aufweisend
eine Steuereinrichtung (10, 10A, 10B) zum Steuern des von der Leuchte abgegebenen Lichts auf Grundlage des von dem Ausgabemittel (5) ausgegebenen Signals.

8. Verfahren zur Anwesenheitsdetektion mit den Schritten:
Empfangen eines Hochfrequenz-Funksignals (S2) während einer Datenübertragung mittels einer Datenübertragungseinrichtung (2);
Erfassen einer durch die Anwesenheit eines im Empfangsbereich der Datenübertragungseinrichtung (2) befindlichen Objekts (4) verursachten Änderung in dem für die Datenübertragung empfangenen Hochfrequenz-Funksignal (S2); und
Ausgeben eines eine Anwesenheit eines Objekts (4) anzeigenden Signals auf Grundlage der erfassten Änderung,
**dadurch gekennzeichnet, dass**
nach einer ersten Erfassung einer Anwesenheit des Objekts (4), welche sich während der Datenübertragung ereignet, Hochfrequenz-Funksignale, die nicht einer Datenübertragung, sondern der Objekterfassung dienen, mittels der Datenübertragungseinrichtung (2) gesendet werden.

9. Verfahren nach Anspruch 8, wobei
die Anwesenheit des im Empfangsbereich der Datenübertragungseinrichtung (2) befindlichen Objekts (4) zumindest eine Verschiebung der Phase des gesendeten Hochfrequenz-Funksignals (S1) verursacht und in dem Erfassungsschritt zumindest die Phasenverschiebung in dem empfangenen Hochfrequenz-Funksignal (S2) detektiert wird.

10. Verfahren nach Anspruch 8 oder 9, wobei
die Anwesenheit des im Empfangsbereich der Datenübertragungseinrichtung (2) befindlichen Objekts (4) zumindest eine Änderung der Frequenz des gesendeten Hochfrequenz-Funksignals (S1) verursacht und in dem Erfassungsschritt zumindest die Frequenzänderung in dem empfangenen Hochfrequenz-Funksignal (S2) detektiert wird.

11. Verfahren nach Anspruch 10, zusätzlich mit dem Schritt:
Bestimmen der Bewegungsrichtung und/oder des Abstands des in dem Empfangsbereich der Datenübertragungseinrichtung (2) befindlichen Objekts (4) bezüglich der Datenübertragungseinrichtung (2) auf der Grundlage der erfassten Frequenzänderung.

12. Verfahren nach Anspruch 11, wobei
das Signal an zumindest eine Leuchte (9A, 9B, 9C) von einer Vielzahl von an verschiedenen Orten befindlichen Leuchten (9A, 9B, 9C) ausgegeben wird, welche der bestimmten Bewegungsrichtung und/oder dem bestimmten Abstand zugeordnet ist.

13. Verfahren nach einem der Ansprüche 8 bis 12, zusätzlich mit dem Schritt:
Senden von Informationen mittels der Datenübertragungseinrichtung (2) über die in dem Erfassungsschritt erfasste Anwesenheit an zumindest eine Vorrichtung (1) zur Anwesenheitsdetektion.

14. Verfahren nach einem der Ansprüche 8 bis 13, zusätzlich mit den Schritten:
Empfangen von Informationen mittels der Datenübertragungseinrichtung (2) von zumindest einer Vorrichtung zur Anwesenheitsdetektion (1) über aktuell detektierte Anwesenheiten von Objekten (4); und
Bestimmen der Bewegungsrichtung des in dem Empfangsbereich der Datenübertragungseinrichtung (2) befindlichen Objekts (4) auf Grundlage der erfassten Änderung und der empfangenen Informationen; wobei
das Signal in dem Ausgabeschritt auf Grundlage der bestimmten Bewegungsrichtung ausgeben wird.

15. Verfahren nach einem der Ansprüche 8 bis 14, wobei
das empfangene Hochfrequenz-Funksignal eine Frequenz von 2,4 GHz oder höher aufweist.

## Claims

1. Presence detection device having
means (2) for transmitting and receiving high-frequency radio signals (S1, S2) for data transmission;
means (3) for detecting a change in a high-frequency radio signal (S2) received by the transceiver means (2) for data transmission caused by the presence of an object (4) located in the reception range of the transceiver means (2); and
means (5) for outputting a signal indicating a presence of an object (4) based on the change detected by the detection means (3);
**characterized in that**
the transceiver means (2) is designed to transmit high-frequency radio signals, which are not used for data transmission but for object detection, after a first detection of a presence of the object (4), which occurs during data transmission.

2. Device according to Claim 1, wherein
the presence of the object (4) located in the reception range of the transceiver means (2) causes at least a shift in the phase of the transmitted high-frequency radio signal (S1) and the detection means (4) for detecting the change is designed to detect at least the phase shift in the received high-frequency radio signal (S2).

3. Device according to Claim 1 or 2, wherein
the presence of the object (4) located in the reception range of the transceiver means (2) causes at least a change in the frequency of the transmitted high-frequency radio signal (S1) and the detection means (3) for detecting the change is designed to detect at least the frequency change in the received high-frequency radio signal (S2).

4. Device according to any of Claims 1 to 3, wherein
the transceiver means (2) is designed to transmit at least information about currently detected presences of objects (4) to at least one other device (8, 9B) for presence detection during data transmission.

5. Device according to any of Claims 1 to 4, having
means (3) for determining the direction of movement of the object (4) located in the reception range of the transceiver means (2); wherein
the transceiver means (2) is designed to receive at least information about currently detected presences of objects (4) from at least the other device (8, 9B) for presence detection during data transmission;
the determination means (3) is configured to determine the direction of movement at least based on the change detected by the detection means (3) and the received information; and
the output means (5) is configured to output the signal based on the determined direction of movement.

6. Device according to any of Claims 1 to 5, wherein
the transceiver means (2) is designed to at least receive high-frequency radio signals with frequencies of 2.4 GHz or higher.

7. Light fixture having at least one device according to any one of Claims 1 to 6, comprising
a control device (10, 10A, 10B) for controlling the light emitted by the light fixture based on the signal output by the output means (5).

8. Method for presence detection, comprising the steps of:
receiving a high-frequency radio signal (S2) during data transmission by means of a data transmission device (2);
detecting a change in the high-frequency radio signal (S2) received for data transmission caused by the presence of an object (4) located in the reception range of the data transmission device (2); and
outputting a signal indicating a presence of an object (4) based on the detected change,
**characterized in that**
after a first detection of a presence of the object (4), which occurs during data transmission, high-frequency radio signals which do not serve for data transmission but for object detection are transmitted by means of the data transmission device (2).

9. Method according to Claim 8, wherein
the presence of the object (4) located in the reception range of the data transmission device (2) causes at least a shift in the phase of the transmitted high-frequency radio signal (S1) and at least the phase shift in the received high-frequency radio signal (S2) is detected in the detection step.

10. Method according to Claim 8 or 9, wherein
the presence of the object (4) located in the reception range of the data transmission device (2) causes at least a change in the frequency of the transmitted high-frequency radio signal (S1) and at least the frequency change in the received high-frequency radio signal (S2) is detected in the detection step.

11. Method according to Claim 10, additionally comprising the step of:
determining the direction of movement and/or the distance of the object (4) located in the reception range of the data transmission device (2) with respect to the data transmission device (2) based on the detected frequency change.

12. Method according to Claim 11, wherein
the signal is output to at least one light fixture (9A, 9B, 9C) of a plurality of light fixtures (9A, 9B, 9C) located at different locations, which is assigned to the specific direction of movement and/or the specific distance.

13. Method according to any of Claims 8 to 12, additionally comprising the step of:
transmitting information about the presence detected in the detection step to at least one device (1) for presence detection by means of the data transmission device (2).

14. Method according to any of Claims 8 to 13, additionally comprising the step of:
receiving information by means of the data transmission device (2) from at least one presence detection device (1) about currently detected presences of objects (4); and
determining the direction of movement of the object (4) located in the reception range of the data transmission device (2) based on the detected change and the received information; wherein
the signal is output in the output step based on the determined direction of movement.

15. Method according to any of Claims 8 to 14, wherein
the received high-frequency radio signal has a frequency of 2.4 GHz or higher.

## Revendications

1. Dispositif de détection de présence comportant
un moyen (2) d'envoi et de réception de signaux radio à haute fréquence (S1, S2) pour la transmission de données ;
un moyen (3) de détection d'une modification, provoquée par la présence d'un objet (4) se trouvant dans la zone de réception du moyen d'envoi et de réception (2), dans un signal radio à haute fréquence (S2) reçu par le moyen d'envoi et de réception (2) pour la transmission de données ; et
un moyen (5) d'émission d'un signal indiquant une présence d'un objet (4) sur la base de la modification détectée par le moyen de détection (3) ;
**caractérisé**
**en ce que** le moyen d'envoi et de réception (2) est conçu pour envoyer, après une première détection d'une présence de l'objet (4) qui a lieu pendant la transmission de données, des signaux radio à haute fréquence qui ne servent pas à une transmission de données, mais à la détection de l'objet.

2. Dispositif selon la revendication 1, dans lequel
la présence de l'objet (4) se trouvant dans la zone de réception du moyen d'envoi et de réception (2) provoque au moins un décalage de la phase du signal radio à haute fréquence (S1) envoyé et le moyen de détection (4) pour la détection de la modification est conçu pour détecter au moins le décalage de phase dans le signal radio à haute fréquence (S2) reçu.

3. Dispositif selon la revendication 1 ou 2, dans lequel
la présence de l'objet (4) se trouvant dans la zone de réception du moyen d'envoi et de réception (2) provoque au moins une modification de la fréquence du signal radio à haute fréquence (S1) envoyé et le moyen de détection (3) pour la détection de la modification est conçu pour détecter au moins la modification de fréquence dans le signal radio à haute fréquence (S2) reçu.

4. Dispositif selon l'une des revendications 1 à 3, dans lequel
le moyen d'envoi et de réception (2) est conçu pour transmettre, lors de la transmission de données, au moins des informations sur des présences actuellement détectées d'objets (4) à au moins un autre dispositif (8, 9B) de détection de présence.

5. Dispositif selon l'une des revendications 1 à 4, présentant
un moyen (3) de détermination du sens de déplacement de l'objet (4) se trouvant dans la zone de réception du moyen d'envoi et de réception (2) ; dans lequel
le moyen d'envoi et de réception (2) est conçu pour recevoir, lors de la transmission de données, au moins des informations sur des présences actuellement détectées d'objets (4) provenant d'au moins l'autre dispositif (8, 9B) de détection de présence ;
le moyen de détermination (3) est conçu pour déterminer le sens de déplacement au moins sur la base de la modification détectée par le moyen de détection (3) et des informations reçues ; et
le moyen d'émission (5) est conçu pour émettre le signal sur la base du sens de déplacement déterminé.

6. Dispositif selon l'une des revendications 1 à 5, dans lequel
le moyen d'envoi et de réception (2) est conçu pour au moins recevoir des signaux radio à haute fréquence comportant des fréquences de 2,4 GHz ou plus.

7. Luminaire comportant au moins un dispositif selon l'une des revendications 1 à 6, présentant
un équipement de commande (10, 10A, 10B) pour la commande de la lumière fournie par le luminaire sur la base du signal émis par le moyen d'émission (5).

8. Procédé de détection de présence comportant les étapes consistant à :
recevoir un signal radio à haute fréquence (S2) pendant une transmission de données au moyen d'un équipement de transmission de données (2) ;
détecter une modification, provoquée par la présence d'un objet (4) se trouvant dans la zone de réception de l'équipement de transmission de données (2), dans le signal radio à haute fréquence (S2) reçu pour la transmission de données ; et
émettre un signal indiquant une présence d'un objet (4) sur la base de la modification détectée,
**caractérisé en ce que,**
après une première détection d'une présence de l'objet (4), qui se produit pendant la transmission de données, des signaux radio à haute fréquence, qui ne servent pas à une transmission de données, mais à la détection de l'objet, sont envoyés au moyen de l'équipement de transmission de données (2).

9. Procédé selon la revendication 8, dans lequel
la présence de l'objet (4) se trouvant dans la zone de réception de l'équipement de transmission de données (2) provoque au moins un décalage de la phase du signal radio à haute fréquence (S1) envoyé et, dans l'étape de détection, au moins le décalage de phase est détecté dans le signal radio à haute fréquence (S2) reçu.

10. Procédé selon la revendication 8 ou 9, dans lequel
la présence de l'objet (4) se trouvant dans la zone de réception de l'équipement de transmission de données (2) provoque au moins une modification de la fréquence du signal radio à haute fréquence (S1) envoyé et, dans l'étape de détection, au moins la modification de fréquence est détectée dans le signal radio à haute fréquence (S2) reçu.

11. Procédé selon la revendication 10, comportant en outre l'étape consistant à :
déterminer le sens de déplacement et/ou la distance de l'objet (4) se trouvant dans la zone de réception de l'équipement de transmission de données (2) par rapport à l'équipement de transmission de données (2) sur la base de la modification de fréquence détectée.

12. Procédé selon la revendication 11, dans lequel
le signal est émis à au moins un luminaire (9A, 9B, 9C), parmi une pluralité de luminaires (9A, 9B, 9C) situés à différents endroits, lequel luminaire est associé au sens de déplacement déterminé et/ou à la distance déterminée.

13. Procédé selon l'une des revendications 8 à 12, comportant en outre l'étape consistant à :
envoyer, au moyen de l'équipement de transmission de données (2), des informations concernant la présence détectée lors de l'étape de détection à au moins un dispositif (1) de détection de présence.

14. Procédé selon l'une des revendications 8 à 13, comportant en outre les étapes consistant à :
recevoir des informations au moyen de l'équipement de transmission de données (2) provenant d'au moins un dispositif de détection de présence (1) concernant des présences actuellement détectées d'objets (4) ; et
déterminer le sens de déplacement de l'objet (4) se trouvant dans la zone de réception de l'équipement de transmission de données (2) sur la base de la modification détectée et des informations reçues ; dans lequel
le signal est émis dans l'étape d'émission sur la base du sens de déplacement déterminé.

15. Procédé selon l'une des revendications 8 à 14, dans lequel
le signal radio à haute fréquence reçu présente une fréquence de 2,4 GHz ou plus.
